## Europäisches Patentamt
## European Patent Office
## Office européen des brevets

(11) Veröffentlichungsnummer: **0 022 473**
**B1**

(12) # EUROPÄISCHE PATENTSCHRIFT

(45) Veröffentlichungstag der Patentschrift:
**19.10.83**

(51) Int. Cl.³: **C 01 B 17/90**

(21) Anmeldenummer: **80103185.7**

(22) Anmeldetag: **09.06.80**

(54) **Verfahren und Vorrichtung zum Regenerieren von Schwefelsäure.**

(30) Priorität: **16.05.80 DE 3018664**
**13.06.79 CH 5513/79**

(43) Veröffentlichungstag der Anmeldung:
**21.01.81 Patentblatt 81/3**

(45) Bekanntmachung des Hinweises auf die Patenterteilung:
**19.10.83 Patentblatt 83/42**

(84) Benannte Vertragsstaaten:
**BE CH DE FR GB IT LI NL SE**

(56) Entgegenhaltungen:
**DE-A-2 360 706**
**DE-B-2 242 055**
**DE-C-688 010**
**DE-C-1 025 401**
**DE-C-1 079 606**
**GB-A-1 280 624**

(73) Patentinhaber: **BAYER AG, Zentralbereich Patente, Marken und Lizenzen, D-5090 Leverkusen 1, Bayerwerk (DE)**
Patentinhaber: **BERTRAMS AKTIENGESELLSCHAFT, Eptingerstrasse 41, CH-4132 Muttenz 1 (CH)**

(72) Erfinder: **Forter, Hansruedi, Schlossweg 3, CH-4466 Ormalingen (CH)**
Erfinder: **Groening, Jürgen, Dipl.-Ing., Braschosserstrasse 68, D-5200 Siegburg (DE)**
Erfinder: **Kühnlein, Hans L., Hümpeliweg 20, CH-4414 Füllinsdorf (CH)**
Erfinder: **Küng, Hans Rudolf, Gassackerweg 37, CH-4702 Frenkendorf (CH)**
Erfinder: **Maas, Joachim, Dr., Otto-Hahn-Strasse 25, D-5010 Bergheim (DE)**
Erfinder: **Schultz, Karl-Heinz, Dr., Deswatinesstrasse 61, D-4150 Krefeld (DE)**

Verfahren und Vorrichtung zum Regenerieren von Schwefelsäure

Die vorliegende Erfindung betrifft ein Verfahren und eine Vorrichtung zum Regenerieren von verunreinigter Schwefelsäure in mehreren Stufen, unter indirekter Beheizung in Apparaturen aus oder mindestens beschichtet mit Email. Unter Email werden glasartige Überzüge, die säurefest sind und einer Temperaturwechselbeanspruchung standhalten, verstanden.

Es ist bekannt aus der GB-A-1 280 624, die Aufbereitung verunreinigter Schwefelsäuren, die Konzentrationen zwischen 90 und 100% aufweisen, bei Temperaturen oberhalb 300°C durchzuführen. Weiterhin ist aus der DE-B-2 242 055 die Aufkonzentrierung und Reinigung von mit organischen Substanzen verunreinigten Schwefelsäuren in Emailanlagen bekannt.

Schließlich ist aus der DE-C-1 079 606 die Reinigung von wäßrigen 70—73%igen Schwefelsäuren bekannt, welche nitrierbare organische Verbindungen enthalten. Diese werden dabei bis zum NO reduziert. Dieses kann durch Mitnahme im Wasserdampfstrom dem System entzogen werden.

Die Aufgabe der vorliegenden Erfindung ist es, ein Verfahren zur Verfügung zu stellen, welches die Aufbereitung hochkonzentrierter verunreinigter Schwefelsäuren in wirtschaftlicher Weise und hoher Effektivität erlaubt.

Gegenstand der vorliegenden Erfindung ist ein Verfahren zum Regenerieren von verunreinigter Schwefelsäure mit einer Eingangskonzentration von 90 bis 98,3 Gew.-% $H_2SO_4$ in einer indirekt beheizbaren Reinigungseinheit unter Verwendung eines Oxidationsmittels, das dadurch gekennzeichnet ist, daß die zu reinigende Schwefelsäure in einer Reaktionszone im Gegenstrom zu Salpetersäure oder Nitrosylschwefelsäure als Oxidationsmittel fließt.

Eine bevorzugte Ausführungsform des erfindungsgemäßen Verfahrens liegt darin, daß die verunreinigte Schwefelsäure in einer Aufheizzone bei Temperaturen zwischen 140 bis 330°C auf mindestens 96 Gew.-% $H_2SO_4$ aufkonzentriert, dann in die Reaktionszone gelangt und anschließend einer Nachreaktionszone zugeführt wird, in der eine Temperatur bis 330°C aufrechterhalten und die Säure in der gesamten Reinigungseinheit bei Normaldruck oder vermindertem Druck gereinigt wird.

Es hat sich gezeigt, daß durch den bewußten Verzicht einer vollständigen Oxidation der Organika in der Reaktionszone ein weitgehender Abbau eventuell entstandener Reaktionsprodukte und Restorganika in der Nachreaktionszone möglich ist.

Überraschenderweise ist mit emailbeschichteten Anlagen die Einhaltung der genannten hohen Temperaturen und damit das Konzentrieren der Säure bis zum azeotropen Punkt möglich. Die hohe Korrosionsbeständigkeit von Quarz, Glas und glasartigen Werkstoffen gegen Säuren ist bekannt. Insbesondere haben sich Emailschichten als kostengünstiger Korrosionsschutz erwiesen. Eine große Gefahr besteht jedoch darin, daß sich in der Emailschicht unter bestimmten Betriebsbedingungen Haarrisse bilden, insbesondere unter solchen Bedingungen, bei denen Wärme übertragen werden muß, weil dadurch die Gefahr der Haarrißbildung noch erhöht wird.

Emailbeschichtungen werden bei hoher Temperatur auf Strahl aufgebracht. Infolge der verschiedenen Wärmeausdehnungskoeffizienten von Stahl- und Emailschicht entsteht beim Abkühlen in der Emailschicht eine Druckspannung, welche erwünscht und zur Verhinderung von Rissen in der Emailschicht notwendig ist. Bei einer Raumtemperatur von 25°C beträgt die dieser Druckspannung entsprechende Stauchung der Emailschicht etwa 0,0015 m/1 m. Mit sinkender Temperatur nimmt die Druckspannung zu, mit steigender Temperatur entsprechend ab, so daß sie üblicherweise bei einer mittleren Temperatur von ca. 400°C 0 wird. Würde man also davon ausgehen, daß immer eine Druckspannung in der Emailschicht vorhanden sein muß, so wäre unter idealen Bedingungen die Verwendung von emaillierten Teilen bis zu einer Temperatur von ca. 400°C möglich. Unter den normalen Einsatzbedingungen führen jedoch verschiedene Faktoren bei den bekannten Verdampfervorrichtungen dazu, daß bereits bei niedrigen mittleren Temperaturen die Druckspannung 0 oder sogar negativ wird, was fast zwangsläufig zu den gefürchteten Haarrissen führt. Zu diesen Faktoren gehört u. a. die Übertragung von Wärme von der Stahlseite her durch die Emailschicht auf ein zu behandelndes Medium. Infolge des bekannten Temperaturverlaufes beim Übertragen von Wärme hat die Emailschicht eine geringere mittlere Temperatur als die Stahlschicht, wodurch die Druckspannungen in der Emailschicht im Vergleich zum stationären Zustand vermindert wird. Diese Erscheinung wird noch weiter negativ beeinflußt durch ungleichmäßige Erwärmung oder Abkühlung der emailbeschichteten Wand, z. B. dadurch, daß die Wärmezufuhr von der Stahlseite her ungleichmäßig ist, oder dadurch, daß die Kühlung auf der Seite der Emailschicht infolge von Verkrustungen dieser Schicht oder infolge ungleichmäßiger Strömung des zu erwärmenden Mediums oder dessen teilweiser Verdampfung ungleichmäßig erfolgt. Erfindungsgemäß werden deshalb die Emailschichten so eingesetzt, daß in ihnen noch eine restliche Druckspannung vorhanden ist. Diese erfindungsgemäße Restspannung verhindert das Entstehen von Haarrissen, so daß die Emailschicht einwandfrei gegen Korrosion durch die heiße, hochkonzentrierte Säure schützt. Die erfindungsgemäße Restdruckspannung bzw. Reststauchung, die unter allen Betriebsbedingungen aufrechtzuerhalten ist, soll unter den jeweiligen Betriebsbedingungen möglichst groß sein, jedoch vorzugsweise nicht kleiner als 0,0003 m/1 m. In sehr speziellen Fällen sind auch kleinere Restdruckspannungen zulässig, aber nur wenn keine Deformation und andere negative Einflüsse auf die Emailschicht zu befürchten sind. In solchen Fällen soll jedoch auch eine Restdruckspannung von ca. 10%, d. h. eine Stauchung von 0,00015 m/1 m in der Emailschicht vorhanden sein.

Ein weiterer erfindungsgemäßer Punkt ist die gesamte Temperaturführung, wobei die Säure zwangsläufig mit einer solchen vorgegebenen Geschwindigkeit an den emaillierten Wärmetauscherflächen vorbeiströmt, daß keine Feststoffablagerung an diesen Flächen stattfinden kann und gleichzeitig auch so, daß an den Wärmetauscherflächen keine Verdampfung stattfindet, sondern lediglich eine Erhitzung der Säure. Aus diesem Grunde wird erfindungsgemäß ein mehrfaches der zu konzentrierenden Säuremenge in der Apparatur umgewälzt und gleichzeitig dafür gesorgt, daß der statische Druck am Austritt des letzten Wärmetauscherrohres genügend groß ist, um bei der vorgegebenen Säuretemperatur eine Verdampfung zu vermeiden. Diese Temperaturführung muß jedoch im Zusammenhang mit der erfindungsgemäßen Restdruckspannung geschehen. Bei Säure- und Wärmeträgergeschwindigkeiten von über ca. 0,8 m/sec, vorzugsweise 0,9 bis 1,5 m/sec, wird die erfindungsgemäße minimale 20%ige Reststauchung von 0,0003 m/1 m in der Emailschicht nicht unterschritten. Generell kann die Geschwindigkeit der Säure in den Wärmetauscherrohren in dem Bereich zwischen ca. 0,4 und 4 m/sec variiert werden. Ganz besonders bevorzugt wird jedoch eine Geschwindigkeit von 0,8 bis 1,2 m/sec eingestellt. Bei dieser Geschwindigkeit bleiben evtl. vorhandene Reststoffe in der Suspension. In einem zusätzlichen Schritt wird in einer, z. B. quarz- bzw. emailbeschichteten Apparatur eine vollständige Reinigung der Säure durchgeführt; und zwar durch Erhitzen der konzentrierten Säure auf ca. 290 bis 350° C bei Atmosphärendruck unter Einhaltung bestimmter Verweilzeiten, mit gleichzeitiger Zugabe eines Oxidationsmittels, vorzugsweise Salpetersäure, in der benötigten Menge. Beim Arbeiten unter vermindertem Druck, was nach dem erfindungsgemäßen Verfahren auch möglich ist, braucht in der jeweiligen Stufe nur eine entsprechend niedrigere Temperatur aufrechterhalten zu werden. In der Reinigungseinheit wird die Säure bei einem Druck zwischen ca. $1,33 \cdot 10^4$ N/m² und Normaldruck aufkonzentriert.

Für die meisten aufzuarbeitenden Säuren dürfte eine Reinigung unter vermindertem Druck jedoch im allgemeinen von untergeordneter Bedeutung sein, daß bei den dann anzuwendenden, entsprechend niedrigen Temperaturen einige organische Bestandteile noch nicht vollständig zersetzt werden. Bei einem Druck von $6,7 \cdot 10^3$ N/m² ist z. B. eine Temperatur von ca. 220° C ausreichend, um die Säure aufzukonzentrieren.

Die erfindungsgemäße Vorrichtung zur Durchführung des Verfahrens betrifft eine Reinigungseinheit, enthaltend ein strahlungsbeheiztes Quarzglasrohr zur Erhitzung und Reinigung der Säure, wobei das Quarzrohr von einem konzentrischen Strahlungsmantel und dieser wiederum von einer elektrischen Widerstandsheizung umgeben ist, sowie ein Verweilgefäß als Nachreaktionszone.

In der Reinigungssäule, dem strahlungsbeheizten Quarzrohr, ist eine Vorrichtung vorgesehen, über die eine Flüssigkeit in Form von kleinen Tropfen, bzw. bei den Temperaturen gasförmig in die aufzukonzentrierende Säure eingeführt werden kann, z. B. ein Siebboden, eine Düse oder eine Fritte. Als besonders vorteilhaft zur Durchführung dieses Verfahrens hat sich eine Einrichtung erwiesen, in welcher das Oxidationsmittel in der Hauptreaktionszone im Gegenstrom zur Säure geführt wird. Durch diese Gegenstromführung wird nicht nur eine bessere Ausnützung des Oxidationsmittels erzielt, sondern es wird gleichzeitig bewirkt, daß sich praktisch kein Schwefeldioxid bildet, was unerwünscht wäre, es wird so auch bewirkt, daß bei der Hauptreaktion entstehende nitrose Gase im Verlaufe ihres Kontaktes mit der eintretenden organikahaltigen Schwefelsäure praktisch vollständig zu Stickstoff reduziert werden, so daß praktisch keine nitrosen Gase die Apparatur verlassen.

Eine bevorzugte erfindungsgemäße Vorrichtung zur Durchführung des Verfahrens ist anhand der Zeichnungen im folgenden beispielsweise näher erläutert; dabei zeigt:

Fig. 1 schematisch eine Einrichtung, deren Haupt- und Nachreaktionszone in einem durchgehenden Quarzrohr angeordnet sind und

Fig. 2 eine besonders zweckmäßige Ausführungsform mit getrennten Reaktionszonen,

Fig. 3 eine Ausführungsform mit getrennten Aufheiz-/Konzentrier-Hauptreaktions-Nachreaktionsbehältern.

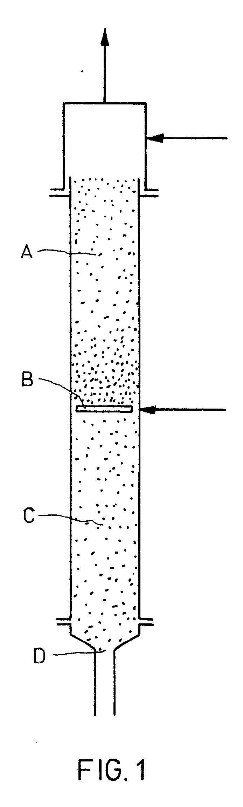

Beim schematischen Aufbau nach Fig. 1 tritt die zu reinigende Säure oben in die Aufheizzone A des Quarzrohres ein, während das Oxidationsmittel, z. B. 65%ige $HNO_3$ in der Rohrmitte über eine Verteilvorrichtung B im Gegenstrom zur Schwefelsäure zugeführt wird. Während die Abgase nach oben entweichen können, tritt die Schwefelsäure nach unten in die Reaktionszone C, von wo sie z. B. über einen Mischkühler D die Einrichtung verläßt. Die Reaktionszone C kann so groß gewählt werden, daß sie gegebenenfalls Reaktionszone und Nachreaktionszone umfaßt.

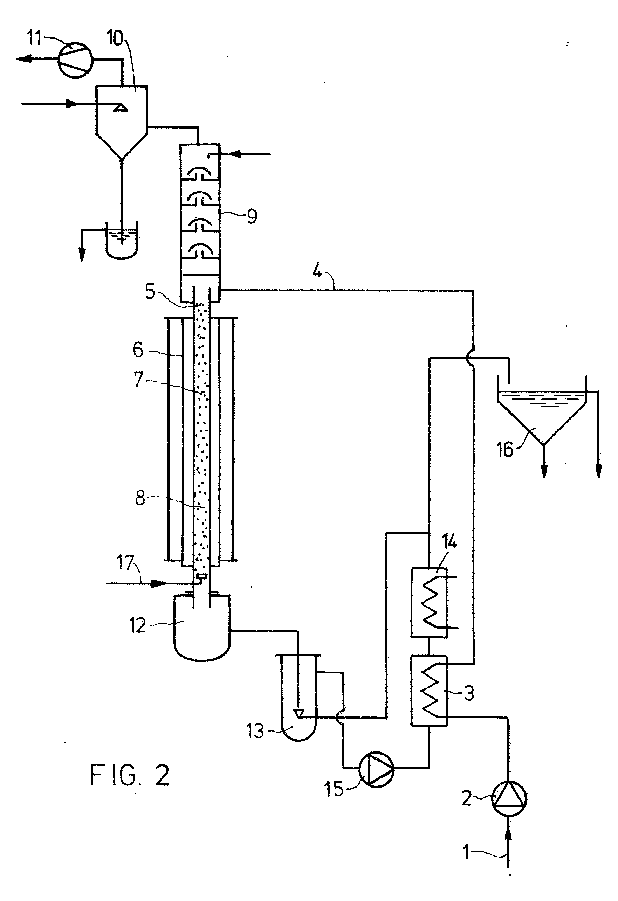

Es ist z. B. bekannt, die Oxidationsreaktion mit Salpetersäure in gußeisernen Kesseln vorzunehmen. Als besonders vorteilhaft hat sich jedoch eine Reinigungseinheit mit einem Rohrreaktor aus Quarz gemäß Fig. 2 erwiesen, in welchem erfindungsgemäß die Säure zunächst durch indirekte Wärmezufuhr, vorzugsweise durch Strahlungsheizung, auf Reaktions- (7) und Oxidationstemperatur gebracht wird und anschließend in die Reaktionszone (8) gelangt, wo die Säure im Gegenstrom mit einem Oxidationsmittel, vorzugsweise Salpetersäure, in Berührung gebracht wird, wodurch die Organika oxidiert werden. Die dabei teilweise entstehende Nitrosyl-Schwefelsäure (HNOSO₄) reagiert in einer Nachreaktionszone (12) mit den restlich vorhandenen Organika, so daß am Ende der Reinigungseinheit eine sehr reine, hochprozentige Säure abgezogen werden kann. Die Nachreaktionszone ist mit der Reaktionszone und Aufheizzone direkt verbunden. In der Reaktionszone kann die Konzentration der die Aufheizzone verlassenden Säure in geringem Umfang erniedrigt, erhöht oder auch konstant gehalten werden.

Je nach der Menge der für die Oxidation der organischen Bestandteile zugesetzten Salpetersäure gelangt mehr oder weniger Wasser in die bereits hochkonzentrierte Schwefelsäure. Desgleichen entsteht Wasser in geringen Anteilen bei der Oxidation der organischen Bestandteile. Durch diese geringe Wasserzufuhr kann die bereits hochkonzentrierte Säure bis zu maximal 2 Gew.-% in ihrer Konzentration erniedrigt werden.

Die erfindungsgemäß bevorzugte Ausführungsform besteht darin, diesen eingebrachten Wasseranteil durch weitere Wärmezufuhr in der Reaktionszone wieder zu entfernen, d. h, die Säure mit der in der Hochkonzentriereinheit gewonnenen Konzentration nach der Nachreaktionszone abzuziehen, vorzugsweise mit mindestens 96 Gew.-% H₂SO₄, ganz besonders bevorzugt mit ca. 98 bis 98,3 Gew.-% H₂SO₄.

Es besteht die Möglichkeit, über die in der Hochkonzentriereinheit gewonnene Konzentration eine weitere Konzentrierung der Säure in der Reaktionszone vorzunehmen. Speziell mit dieser Betriebsweise wird also nicht nur eine sehr reine, sondern gleichzeitig auch sehr hochkonzentrierte Säure erhalten.

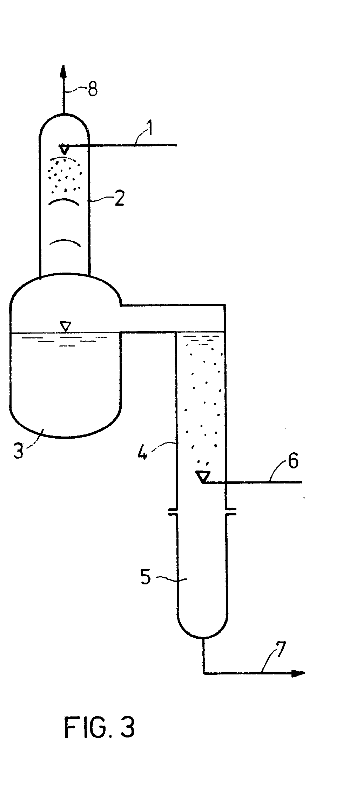

In der Fig. 2 ist die Aufheizzone und die anschließende Reaktionszone sowie die Nachreaktionszone im selben Apparat untergebracht, dies stellt die erfindungsgemäß bevorzugte Ausführungsform dar. Dies muß jedoch nicht zwangsweise der Fall sein. Eine Verfahrens- und Vorrichtungsvariante besteht z. B. darin, daß die Reaktionszone apparativ von der Aufheizzone und der Nachreaktionszone getrennt ist (Fig. 3).

Das erfindungsgemäße Verfahren soll nun anhand der Fig. 2 detailliert und beispielhaft beschrieben werden.

Mit der Kreiselpumpe 2 wird bei 1 konzentrierte Schwefelsäure (1053 kg/h, 4000 ppm TOC, 95 Gew.-% H₂SO₄) dem Wärmeaustauscher 3 zugeführt, in welchem die Rohsäure durch Wärmeentzug aus der Produktsäure vorgewärmt wird. Die vorgewärmte (z. B. 140°C), hochkonzentrierte, jedoch ungereinigte Schwefelsäure wird bei 4 in das mit Säure gefüllte oder berieselte stehende Quarzglasrohr 5 eingespeist.

In diesem Quarzrohr wird die konzentrierte Schwefelsäure unter Normaldruck nahe an den Siedepunkt aufgewärmt, (z. B. von 140°C auf 320°C).

Eine Ausführungsvariante besteht darin, am Rohreintritt (Quarzglasrohr 5 oben) sowie in einer möglichen Rektifizierkolonne 9 unter Vakuum zu fahren.

Bei richtiger Wahl des Unterdruckes herrscht in der Reinigungszone mindestens Normaldruck infolge der Flüssigkeitssäule im Quarzrohr 5.

Eine weitere Möglichkeit besteht darin, im oberen Teil der Aufheizzone 7, zwecks Erhöhung des Wärmedurchganges, die Schwefelsäure als Fallfilm aufzugeben.

Die Wärmeübertragung erfolgt durch Wärmestrahlung, d. h. das Quarzrohr 5 ist von einem konzentrischen Strahlungsmantel und dieser wiederum von einer elektrischen Widerstandsheizung 6 (oder gegebenenfalls einer anderen Wärmequelle, z. B. Rauchgasheizung) umgeben. Die Wärmeenergie wird durch Strahlung von der Heizung auf das Strahlungsrohr übertragen und von diesem wird die nach innen emittierte Wärmestrahlung vom Quarz und von der Säure absorbiert.

In der Aufheizzone 7 kann bei Bedarf eine nicht bis zum azeotropen Punkt konzentrierte Schwefelsäure (z. B. 95 Gew.-% H₂SO₄) bis 98 Gew.-% oder 98,3 Gew.-% konzentriert werden.

Bei starker Brüdenentwicklung empfiehlt es sich, die unter einer Flüssigkeitssäule stehende Aufheiz-, in diesem Fall gleichzeitig auch Konzentrierzone mit Einbauten zu versehen, am zweckmäßigsten mit Füllkörpern.

Die beim Konzentrieren in der Aufheizzone 7 entstehenden Brüden weisen, je nach Eingangskonzentration, Druck und Temperatur der Säure, einen verschieden hohen Säuregehalt auf. Diese Säure muß in einer Rektifizierkolonne 9 durch Stoffaustausch mit einer aufzugebenden Flüssigkeit ausgetauscht werden.

Als Aufgabeflüssigkeit kann Wasser verwendet werden, wobei das mit Schwefelsäure angereicherte ablaufende Waschwasser in die Reinigungsstufe zurückgeführt wird.

Die beim Konzentrieren entstehenden Brüden gelangen über die Rektifizierkolonne 9, in welcher der erwähnte Stoffaustausch stattfindet, in einen Kondensator 10.

Die Erzeugung des Vakuums sowie das Absaugen der nicht kondensierten organischen Dämpfe, die Abgase der oxidierten Organica und der sonstigen Intertgase, erfolgt mit der Vakuumpumpe 11.

Die vorgewärmte, konzentrierte, jedoch noch ungereinigte Schwefelsäure (1020 kg/h, 98 Gew.-% H₂SO₄, 320°C) fließt von der Aufheizzone 7 in die Reaktionszone 8. Die Reaktionszone, bestehend aus dem Unterteil des Quarzrohres 5, ist von einem konzentrischen Strahlungsmantel und dieser wiederum von einer elektrischen Widerstandsheizung 6 (oder gegebenenfalls einer anderen Wärmequelle, z. B. Rauchgasheizung) umgeben. Die Wärmeenergie wird durch Strahlung von der Heizung auf das Strahlungsrohr übertragen und von diesem wird die nach innen emittierte Wärmestrahlung vom Quarz und von der Säure absorbiert.

In dem unteren Teil des Quarzrohres 5 findet die Oxidation der Organica mittels eines bei 17 zugegebenen Oxidationsmittels (z. B. 65%ige Salpetersäure), welches dampfförmig im unteren Teil der Reinigungssäule z. B. über eine Lochplatte zur Erzeugung von kleinen gleichmäßig verteilten Dampfbläschen, eingeführt wird, statt. Bei sehr stark verschmutzten Schwefelsäuren empfiehlt es sich die Reaktionszone 8 mit Einbauten zu versehen, am zweckmäßigsten mit Füllkörpern. Bei Bedarf können die Einbauten über das ganze Quarzrohr ausgeweitet werden.

Durch die Zugabe von Salpetersäure kann sich teilweise auch das in der Produktsäure unerwünschte Nitrosylhydrogensulfat bilden. Dieses wird in einer Nachreaktionszone 12 durch Reaktion mit den Organica teilweise wieder abgebaut. Das Hintereinanderschalten von Aufheizzone und möglicher Konzentrationszone mit der Reinigungszone, d. h. der Reaktionszone und Nachreaktionszone, hat sich als Vorteil erwiesen.

Die beim Konzentrieren im unteren Teil der Aufheizzone 7 entstehenden $SO_3$-Gase werden im oberen Teil des Quarzglasrohres 5 von der kälteren Säure wieder absorbiert.

Die von der Reaktionszone aufsteigenden nicht reduzierten $NO_x$-Gase können in der Aufheizzone weiter mit den Organica reagieren.

Eine strikte Trennung zwischen Aufheiz- und Reaktionszone wird erfindungsgemäß nicht vorgenommen.

Die aus der Nachreaktionszone 12 austretende heiße, konzentrierte Schwefelsäure (320° C, 98% $H_2SO_4$) wird in einem neben der Nachreaktionszone aufgebauten Mischkühler 13 mittels Sekundärkreislaufsäure gleicher Konzentration und Reinheit gekühlt. Vor der Einspeisung in den Mischkühler 13 wird die Sekundärkreislaufsäure in einem Wärmeaustauscher 3 durch die Rohsäure sowie durch einen nachgeschalteten wassergekühlten Wärmeaustauscher 14 gekühlt. Die Produktsäure wird dem Sekundärkreislauf entnommen, und wenn notwendig, in einen Plattenabscheider 16 geleitet, wo das in Suspension befindliche Eisensulfat abgeschieden wird.

In der Reinigungseinheit besitzt die Schwefelsäure eine Eingangskonzentration von 90 bis 98 Gew.-%, eine Ausgangskonzentration von 90 bis 98,3 Gew.-% und eine Temperatur zwischen 140 und 330° C.

Das beschriebene, mit der dargestellten Vorrichtung durchgeführte Verfahren liefert somit bis zum azeotropen Punkt konzentrierte, einwandfrei gereinigte Schwefelsäure.

Das erfindungsgemäße Verfahren zum Regenerieren von Schwefelsäure, nämlich das Aufheizen auf Reaktionstemperatur (evtl. unter gleichzeitigem Höherkonzentrieren), das anschließende Oxidieren der Organika in einer Hauptreaktionszone durch Gegenstromkontakte der Säure mit einem Oxidationsmittel und das (sofern notwendig) nachfolgende Nachreagieren läßt sich selbstverständlich auch mit anderen als vorstehend erläuterten Einrichtungen durchführen.

So ist es z. B. möglich, anstelle des beschriebenen, von außen beheizten Quarzrohres eine entsprechende Vorrichtung aus säurefestem Material, z. B. Email, zu verwenden, welche von innen beheizt ist, also z. B. durch die im Innern der Vorrichtung angebrachten Quarzrohre, welche elektrisch oder mit Rauchgasen beheizt werden.

Anhand von Fig. 3 ist eine weitere sinngemäß Einrichtung dargestellt: die zu regenerierende Säure tritt über Zuführleitung 1 in eine Rektifizierkolonne 2, welche auf einem Behälter 3 montiert ist, in welchem die zu regenerierende Säure auf Reaktionstemperatur aufgeheizt bzw. aufkondensiert wird, anschließend überfließt in die Reaktionszone 4 und in die Nachreaktionszone 5 und diese über Leitung 7 verläßt.

Je nach Ausführung kann der Behälter 3 außen mit Rauchgasen oder von innen mir Quarzrohreinsätzen beheizt werden. Das Oxidationsmittel, welches über Leitung 6 zugeführt wird, strömt auch in diesem Falle im Gegenstrom zur Säure.

**Patentansprüche**

1. Verfahren zum Regenerieren von verunnigter Schwefelsäure mit einer Eingangskonzentration von 90 bis 98,3 Gew.-% $H_2SO_4$ in einer indirekt beheizbaren Reinigungseinheit unter Verwendung eines Oxidationsmittels, dadurch gekennzeichnet, daß die zu reinigende Schwefelsäure in einer Reaktionszone im Gegenstrom zu Salpetersäure oder Nitrosylschwefelsäure als Oxidationsmittel fließt.

2. Verfahren gemäß Anspruch 1, dadurch gekennzeichnet, daß die verunreinigte Schwefelsäure in einer Aufheizzone bei Temperaturen zwischen 140 bis 330° C auf mindestens 96 Gew.-% $H_2SO_4$ aufkonzentriert, dann in die Reaktionszone gelangt und anschließend einer Nachreaktionszone zugeführt wird, in der eine Temperatur bis 330° C aufrechterhalten und die Säure in der gesamten Reinigungseinheit bei Normaldruck oder vermindertem Druck gereinigt wird.

3. Verfahren gemäß einem der Ansprüche 1 oder 2, dadurch gekennzeichnet, daß die Reaktionszone bei einem Druck zwischen $1,33 \cdot 10^4$ N/m² und Normaldruck betrieben wird.

4. Vorrichtung zur Durchführung des Verfahrens gemäß einem der Ansprüche 1 bis 3, bestehend aus einer Reinigungseinheit, enthaltend ein strahlungsbeheiztes Quarzglasrohr zur Erhitzung und Reinigung der Säure, wobei das Quarzrohr von einem konzentrischen Strahlungsmantel und dieser wiederum von einer elektrischen Heizung oder einer Rauchgasheizung umgeben ist, ein Verweilgefäß als Nachreaktionszone sowie eine Zuführungsvorrichtung für das Oxidationsmittel.

5. Vorrichtung gemäß Anspruch 4, dadurch gekennzeichnet, daß das obere Quarzrohrende gleichzeitig den Schwefelsäureeinlaß und den Brüdenauslaß einer oberen eine Konzentrationszone bildenden Quarzrohrpartie bildet, während das untere Quarzrohrende gleichzeitig den Oxidationsmitteleinlaß und den Schwefelsäureauslaß der die Hauptreaktionszone bildenden unteren Quarzrohrpartie bildet, wobei dieses untere Quarzrohrende in einen die Nachreaktionszone bildenden Behälter mündet.

6. Vorrichtung gemäß einem der Ansprüche 4 oder 5, dadurch gekennzeichnet, daß diese einen beheizten Behälter aufweist, welcher einen Einlaß für die zu regenerierende Säure aufweist und in Verbindung steht mit einem nachfolgenden Behälter, der seinerseits mit einer Zuführleitung für das Oxidationsmittel versehen ist und welcher einen Auslaß für die Säure aufweist.

7. Vorrichtung gemäß einem der Ansprüche 4 bis 6, dadurch gekennzeichnet, daß über der Reinigungseinheit eine der Brüdenreinigung dienende Rektifizierkolonne angeordnet ist.

## Claims

1. Process for regenerating contaminated sulphuric acid having an input concentration of 90 to 98.3% by weight of $H_2SO_4$ in an indirectly heatable purification unit using an oxidising agent, characterised in that the sulphuric acid to be purified flows in a reaction zone countercurrently to nitric acid or nitrosyl sulphuric acid as the oxidising agent.

2. Process according to Claim 1, characterised in that the contaminated sulphuric acid is concentrated in a heating zone to at least 96% by weight of $H_2SO_4$, at temperatures of between 140 and 330° C, it then passes into the reaction zone and is subsequently delivered to an after-reaction zone, in which a temperature of up to 330° C is maintained and the acid is purified in the purification unit as a whole either at normal pressure or under reduced pressure.

3. Process according to one of Claims 1 or 2, characterised in that the reaction zone is operated under a pressure of between $1.33 \times 10^4$ N/m² and normal pressure.

4. Apparatus for carrying out the process according to one of Claims 1 to 3, consisting of a purification unit comprising a radiation-heated quartz glass tube for heating and purifying the acid, the quartz tube being surrounded by a concentric radiation jacket in turn surrounded by an electrical heating system or a smoke gas heating arrangement, a residence vessel forming the after-reaction zone and a feed device for the oxidising agent.

5. Apparatus according to Claim 4, characterised in that the upper end of the quartz tube forms both the sulphuric acid inlet and the vapour outlet of an upper part of the quartz tube forming the concentration zone, whilst the lower end of the quartz tube forms both the oxidising agent inlet anf the sulphuric acid outlet of the lower part of the quartz tube forming the main reaction zone, this lower end of the quartz tube opening into a vessel forming the after-reaction zone.

6. Apparatus according to one of Claims 4 or 5, characterised in that it comprises a heated vessel which has an inlet for the acid to be regenerated and which communicates with a following vessel which is in turn provided with a feed pipe for the oxidising agent and which has an outlet for the acid.

7. Apparatus according to one of Claims 4 to 6, characterised in that a rectification column for purifying the vapours is arranged over the purification unit.

## Revendications

1. Procédé de régénération d'acide sulfurique contaminé ayant une concentration initiale de 90 à 98,3% en poids de $H_2SO_4$ dans une unité de purification pouvant être chauffée indirectement, en utilisant un agent d'oxydation, caractérisé en ce que l'acide sulfurique à purifier s'écoule dans une zone réactionelle en contre-courant vis-à-vis de l'acide nitrique ou de l'acide nitrosyl-sulfurique comme agent d'oxydation.

2. Procédé suivant la revendication 1, caractérisé en ce que l'acide sulfurique contaminé est concentré à au moins 96% en poids de $H_2SO_4$ dans une zone de chauffage à des températures comprises entre 140 et 330°C, puis il parvient dans la zone réactionnelle et il est ensuite acheminé à une zone réactionnelle ultérieure dans laquelle est maintenue une température allant jusqu'à 330°C, l'acide étant purifié dans toute l'unité de purification sous pression normale ou sous pression réduite.

3. Procédé suivant une des revendications 1 et 2, caractérisé en ce que la zone réactionnelle fonctionne sous une pression comprise entre $1,33.10^4$ N/m² et la pression normale.

4. Dispositif pour la réalisation du procédé suivant une des revendications 1 à 3, ce dispositif étant constitué d'une unité de purification contenant un tube en verre de quartz chauffé par rayonnement en vue de chauffer et de purifier l'acide, ce tube en quartz étant entouré d'une enveloppe de rayonnement concentrique qui est elle-même entourée d'un système de chauffage électrique ou d'un système de chauffage par les gaz de fumée, un récipient de séjour comme zone réactionnelle ultérieure, ainsi qu'un dispositif d'alimentation pour l'agent d'oxydation.

5. Dispositif suivant la revendication 4, caractérisé en ce que l'extrémité supérieure du tube en quartz forme en même temps l'admission de l'acide sulfurique et l'évacuation des vapeurs chaudes d'une partie supérieure du tube en quartz formant une zone de concentration, tandis que l'extrémité inférieure de ce tube en quartz forme en même temps l'admission de l'agent d'oxydation et l'évacuation de l'acide sulfurique de la partie inférieure du tube en quartz formant la zone réactionnelle principale, cette extrémité inférieure du tube en quartz débouchant dans un récipient formant la zone réactionnelle ultérieure.

6. Dispositif suivant une des revendications 4 et 5, caractérisé en ce qu'il comporte un récipient chauffé comprenant une admission pour l'acide à régénérer et relié à un récipient ultérieur qui, à son tour, comporte une conduite d'alimentation pour l'agent d'oxydation, de même qu'une évacuation pour l'acide.

7. Dispositif suivant une des revendications 4 à 6, caractérisé en ce qu'une colonne de rectification servant à purifier les vapeurs chaudes est disposée au-dessus de l'unité de purification.

FIG. 1

FIG. 2

FIG. 3